# EUROPEAN PATENT APPLICATION

(11) **EP 2 814 259 A1**
(43) Date of publication of application: **17.12.2014**
(21) Application number: 14171904.7
(22) Date of filing: 11.06.2014
(51) Int. Cl.: H04N 21/43, H04N 21/44

(54) **Method, system, capturing device and synchronization server for enabling synchronization of rendering of multiple content parts, using a reference rendering timeline**

(30) Priority: 11.06.2013 EP 13171521
(71) Applicant: Koninklijke KPN N.V., 2516 CK The Hague (NL); Nederlandse Organisatie voor Toegepast -Natuurwetenschappelijk Onderzoek TNO, 2628 VK Delft (NL)
(72) Inventor: Bangma, Menno, 2493 BD The Hague (NL); Stokking, Hans Maarten, 2292 CH Wateringen (NL)
(74) Representative: Wuyts, Koenraad Maria

(57) **Abstract**

The invention relates to a method, a system, a capturing device and a synchronization server for enabling synchronization of rendering of multiple content parts, using a reference rendering timeline. A first content part of said multiple content parts is rendered. The first rendered content is captured and at least one first feature vector is extracted from said first captured content part. One of the at least one first feature vector is matched with a first reference feature vector, wherein the first reference feature vector is associated with a first reference timing information, indicating a first position on said reference rendering timeline. Synchronization information is generated based on the first rendering time and said first reference timing information.

## Description

### BACKGROUND

The invention relates to a method, a system, a capturing device and a synchronization server for enabling synchronization of rendering of multiple content parts, using a reference rendering timeline.

Multi-media techniques such as Voice over IP (VoIP) and Internet Protocol Television (IPTV) enable a large range of multi-media services. One type of multi-media service includes providing a synchronized shared experience for a plurality of users. Such synchronized multi-media services may be provided to a plurality of users, which may be located at different locations. For example, a group of users may separately watch the same television channel and communicate with each other using text, audio and/or video (e.g., social TV).

Other examples include timing-sensitive interactive experiences, such as a live auction, or a broadcasted television quiz program wherein viewers at home may input answers to broadcasted questions and participate in the show.

Furthermore, synchronized multi-media services may be provided to a plurality of different devices associated with one user. For example, a user may wish to watch the same television program on a handheld device in synchronization with a television at home, such that a user may switch from one device to another seamlessly back and forth.

In order to deliver the same, or different but time-line related, content to different users, a content source may transmit media streams via the network to a plurality of rendering devices for play-out or rendering of the content. Due to, for example, different end-to-end delays (due to different transmission delays, network delays and/or different content processing times at different receivers), a so-called Inter-Destination Media Synchronization (IDMS) or group synchronization system may be used to keep the rendering (e.g. the play-out) of content in the streams by the different rendering devices in sync.

Typically, for performing synchronization, information about when the media content is rendered, received, decoded or otherwise processed by a rendering device should be available. Some rendering devices may be capable of generating such information, indicating when a predetermined content part has been rendered. It may be the case that a network device, that transmits the media content as a stream comprising multiple content parts towards the rendering device, is capable of generating information that indicates when a content part of the media content will be rendered.

Said network device (or a rendering device) may use a common clock and identify a content part by using additional streaming information, sent with the media content part, such as contained in a streaming protocol, e.g. the RTP/RTCP protocol.

The media source of the media content may be arranged for providing RTP timestamps with one or more RTP packets in the media content parts of the media stream transmitted towards the rendering device. An RTP timestamp may indicate the position of the RTP packet on a time-line of content transmitted via the media stream.

In that case, some rendering/network devices may be arranged for reporting when a certain packet with a certain RTP timestamp was rendered, received, or otherwise processed. For reporting when the packet was rendered, the rendering/network devices may use a common clock (e.g. a NTP synchronized clock), for example by synchronizing their clocks with each other or with a so called mother clock.

In this way, a timing difference between for example the rendering of a certain packet having a certain RTP timestamp by a first rendering device and the rendering of the same packet having the same RTP timestamp by a second rendering device may be determined. Based on this timing difference, the rendering of media content by the first and second rendering device may be synchronized.

However, in daily practice, the media content may be provided to different rendering devices via different transmitting sources, for example (but not necessarily) associated with different operators, each having their own network. In that case, the RTP timestamp or other timing information added to the media content by a first transmitting source (e.g. provided by a first operator) may not be related to the RTP timestamp or timing information added to the same media content by a second transmitting source (e.g. provided by a second operator). In that case, a timing difference can not be calculated on the basis of the reported RTP timestamps and synchronization can not take place. The reason for this being that RTP time stamps are usually added to a media stream, starting with a random off set.

For, example, it may be the case that the media content is provided to many rendering devices using a so called Content Delivery Network (CDN). In such a CDN, the media content may have been distributed to many servers in the CDN. In that case, a first rendering device may receive the media content from a first media source, i.e. a first server of the CDN, and a second rendering device may receive the media content from a second media source, i.e. a second server of the CDN. In that case, the RTP timestamps provided by the first media source are not related to the RTP timestamps provided by the second media source.

Another disadvantage of the synchronization solutions known in the art, is that when the rendering devices (and/or said network devices) use different protocols (e.g. a multicast RTP stream or an HTTP adaptive steaming (HAS) protocol), a timing difference can also not be calculated and inter-destination synchronization of the different streams can not take place.

A further disadvantage is that a rendering device or a network device should be capable of providing information that indicates when a predefined media content part has been rendered, received, decoded or otherwise processed. Thus, when such functionality is not present in the rendering and or network devices, synchronization can not be achieved.

Even if such functionality would be present in the rendering and/or network devices, such functionality would have to be compatible with the streaming format or protocol used to stream the media content. E.g. a rendering device with the functionality of reporting on RTP time stamps of received RTP packets (content parts), may not have the functionality of reporting on the receipt of content parts transmitted in a different streaming format (e.g. HTTP adaptive streaming).

It is an object of the present invention to provide an improved method, system, and various components of such system, that enable synchronization of rendering of multiple content parts by a first rendering device and that alleviate at least one of the problems discussed above.

### SUMMARY OF THE INVENTION

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

According to a first aspect, a method is provided for enabling synchronization of rendering multiple content parts, using a reference rendering timeline, said method comprising:
generating a first captured content part by capturing a first rendered content part, wherein said first rendered content part is generated by rendering a first content part of said multiple content parts by a first rendering device;
determining a first rendering time, indicating when said first content part was rendered by the first rendering device;
extracting at least one first feature vector from said first captured content part;
matching one of said at least one first feature vector with a first reference feature vector, wherein said first reference feature vector is associated with a first reference timing information, indicating a first position on said reference rendering timeline;
generating synchronization information for said synchronization based on the first rendering time and said first reference timing information.

The wording "content" or "media content" may refer to any (media) content that comprises data that, when rendered, may be perceived by any one of the human senses. For example, the content may comprise data that represent movies, pictures and/or sounds. The multiple content parts are portions of said content. For example, the multiple content parts may be portions of a certain movie, or TV program.

The multiple content parts may be obtained by dividing a media content, for example a movie, into said multiple content parts. Said multiple content parts may be transmitted as one or more media streams to one or more rendering devices. For example, the multiple content parts may be provided in a first media stream to a first rendering device and/or in a second media stream to a second rendering device. Thus, the first content part may be provided to the first rendering device in a first media stream and a second content part may be provided to a second rendering device in a second media stream.

The rendering of content parts may refer to converting the data of the content parts into stimuli that are perceptible by humans. For example, generating sound from an audio data or generating light that represents an image or moving picture from movie data. Such rendering may comprise converting digital data into analogue stimuli. Examples of rendering devices are televisions, radios, computer systems, phones, a tablet computer, etc.

Usually, the rendering of content may refer to the rendering of a media stream, wherein said content is provided in said media stream, and said rendering refers to displaying said content on a display or outputting said content via an audio transmitter such as a speaker.

A reference rendering timeline may refer to a timeline that is used as a reference for rendering. Positions on said reference rendering timeline may indicate a time, and/or two positions on said timeline may indicate a time difference. The multiple content parts may be associated with the reference rendering timeline. In that case, the reference rendering timeline may indicate the predetermined rendering order, or, more broadly, processing order of the multiple content parts.

The first rendering time may indicate when the first content part was rendered by the first rendering device. The first rendering time may be equal to the time when the first content part was rendered by the first rendering device. Alternatively, the first rendering time may be different from the time when the first content part was rendered, but the time difference between the first rendering time and the time when the first content part was rendered may be constant and/or predetermined.

In general, but not necessarily, rendering times may be determined using a common clock (e.g. a NTP synchronized clock), for example by synchronizing the clocks of the devices that determine the rendering times with each other or with a so called mother clock.

Capturing a rendered media content part may refer to the recording of the stimuli, which were generated (and thereby transmitted/emitted), when the media content part was rendered. For example, it may refer to the recording of sound (waves) or electromagnetic radiation in the form of light. Examples of capturing devices are (smart)phones, tablet, laptops, and other devices comprising a camera and/or a microphone. The capturing may further comprise converting analogue stimuli into digital data.

Capturing of the first rendered content part may be executed by a first capturing device. The first rendering device and the first capturing device may be considered as different or separate devices. The capturing device may be capable of recording at least part of the generated stimuli (e.g. transmitted via a transmitter such as for example a display or boxes).

From the first captured content part, at least one first feature vector may be extracted. A feature vector may correspond to one or more, preferably predetermined, features (or characteristics). For example, the (average) loudness of the sound, the luminance of the light, time derivative of the luminance, spectrum of the light, histograms of oriented gradients, etc. The values of the features may be presented as one or more feature vectors, each feature vector being a sequence of numbers, wherein each number represents a value of a (predefined) characteristic or a feature. A feature vector may be one dimensional, i.e. containing only a single value associated with a single feature. The at least one feature vector may be presented as a sequence of feature vectors, thus forming a feature vector sequence.

The at least one first feature vector may be used to identify the first content part in the media stream. The at least one first feature vector extracted from the first captured content part may be compared with at least one first reference feature vector. When one of said at least one first feature vector can be matched with one of said at least one first reference feature vector, the first captured content part may be identified, i.e. said to be corresponding to a specific first reference feature vector.

When one of said at least one first feature vector is said to match with one of said at least one first reference feature vector, it may be the case that the difference between the values of said first feature vector and of said first reference feature vector are each, together, or after processing of the values, below a predefined threshold.

Instead of comparing and matching feature vectors, sequences of feature vectors may be compared and matched.

The first reference feature vector is a feature vector which corresponds, at least partially, with the extracted first feature vector with respect to the features or characteristics it refers to. The first reference feature vector may be obtained via different procedures, as will be explained below.

The first reference feature may be associated with a first reference timing information, indicating a first position on said reference rendering timeline. The first reference timing information may comprise said first position, which may be expressed in any time unit , such as for example seconds or any other quantity suitable (e.g. any unit of any scale).

In some cases, the first position on said reference rendering timeline may be considered as a first predefined reference time and/or may be the time with which the rendering of the first content part by the first rendering device is to be synchronized.

When the rendering of the content parts is synchronized, it may be the case that the first position on the reference rendering timeline corresponds to, coincides with, and/or is equal to the first rendering time.

Therefore, on the basis of the first rendering time and the first reference timing information, synchronization information may be generated, which may enable the synchronization of the rendering of the multiple content parts. Such synchronization information may for instance define a time difference, which time difference may be used for the synchronization of the rendering of these multiple content parts.

By performing the method to the rendering of the multiple content parts by a first rendering device and also to the rendering of the multiple content part by a second device, synchronization of the rendering of the multiple content parts by the first and second rendering device may be obtained, in particular with respect to the first reference timing information, or more in particular with respect to the first position.

In general, a module described in this document (or a group of such modules) may be at least partially implemented in hardware and/or in software. Therefore, a module (or a group of such modules) may be implemented as a device, such as a card with electronics, electronic circuitry, or as a processor or chip, or System on Chip, in such a device.

A module (or a group of such modules) may also be implemented, at least partially, as a computer or processor readable medium, preferably non-transitory, with instructions, wherein the instructions are arranged for making the computer or the processor to act as said module (or said group of modules).

A module (or a group of such modules) may also be implemented as a combination of one or more processors and said computer or processor readable medium.

In general, a device described in this document (such as the first or second rendering device, the synchronization information generator, the first or second capturing device, the buffer device, the media server or the synchronization server) or a group of such devices may be implemented in the same way as described above with respect the implementation of a module or a group of modules.
In further embodiments, a device or a module comprises: at least one processor; a memory accessible by the at least one processor; and
machine-language instructions stored in the memory, that, when executed by the at least one processor, cause the device or module to carry out the functions of the device or module respectively, as taught in the various embodiments according to the invention.

In an embodiment of the method according to the invention, the method further comprises:
generating said first rendered content part by rendering said first content part of said multiple content parts by said first rendering device.

In an embodiment of the method according to the invention, said reference timing information comprises a predefined reference time, and, preferably, generating synchronization information comprises determining a time difference between said first rendering time and said predefined reference time.

The predefined reference time may be considered as the first position on the reference rendering timeline and/or may be the time on which the first content part should have been rendered by the first rendering device. The reference rendering timeline may indicate the rendering timeline according to which the multiple content parts should be rendered.

A time difference may be calculated between said first rendering time and said predefined reference time and may indicate how much the rendering of the content parts by the first rendering device should be delayed or advanced in order to obtain synchronization.

Usually, when synchronizing the rendering of content parts, synchronization is achieved by delaying the rendering of the content parts by one or more of the rendering devices. However, it may also be possible to achieve synchronization by advancing the rendering by one or more of the rendering devices, in addition to or as an alternative to said delaying. In this document, whenever delaying of rendering is described for achieving synchronization, advancing of rendering is also an option.

In an embodiment of the method according to the invention, the method further comprises:
determining a second rendering time, indicating when a second content part of said multiple content parts was rendered, preferably by a second rendering device,
wherein the first content part is provided in a first content stream to the first rendering device and the second content part is provided in a second content stream, preferably to said second rendering device,
wherein generating synchronization information is further based on said second rendering time.

The rendering of the first content part by the first rendering device may be synchronized with the rendering of a second content part of said multiple content parts.

The first and second content part may be rendered by different rendering devices, for example a first and a second rendering device. The first rendering device may be television, while the second rendering device may be tablet computer. The first and second rendering device may be located in the same room or building or may be in different buildings.

The first and second content part may contain different type of media content, for example a video content and an audio content. In that case, the audio content may be synchronized with the video content. In the case of different types of media content, the first and second content part may both be rendered by the same rendering device.

The second rendering time may indicate when the second content part was rendered, for example by the second rendering device. The second rendering time may be equal to the time when the second content part was rendered. Alternatively, the second rendering time may be different to the time when the second content part was rendered, but a time difference between the second rendering time and the time when the second content part was rendered may be constant and/or predetermined.

The second rendering time may be used to generate the synchronization information. For example, the rendering of the first content part by the first rendering device may be synchronized with the rendering of the second content part. In that case, a time difference may be calculated between the first rendering time and the second rendering time. The synchronization information may be generated based on this time difference.

In an embodiment of the method according to the invention, the method further comprises rendering said second content part, preferably by a second rendering device.

In an embodiment of the method according to the invention, said second content part is or corresponds to said first content part. The first and second content part may comprise the same media content, provided in different media streams and rendered by different rendering devices, for example a video content part that is rendered by two different televisions.

In an embodiment of the method according to the invention, said second feature vector is or matches with said first content part. Because the first and second content part may comprise the same media content, the first and second feature vector may match with or correspond to each other.

In an embodiment of the method according to the invention, said reference timing information comprises said second rendering time, and, preferably, generating synchronization information comprises determining a time difference between said first rendering time and said second rendering time.

In an embodiment of the method according to the invention, said second rendering time is determined in accordance with a protocol, preferably a transport or streaming protocol, used for providing said second content part to said second rendering device.

In this way, it may be possible to provide synchronization, in particular Inter-Destination Media Synchronization (IDMS), for rendering devices that are using different protocols and/or are in different networks.

In an embodiment of the method according to the invention, the method further comprises:
generating a second captured content part by capturing said second rendered content part, in particular wherein said second rendered content is generated by rendering said second content part, preferably by the second rendering device;
extracting at least one second feature vector from said second captured content part.

The second rendered content part may be captured by a second capturing device. This may be the same device as the first capturing device.

In an embodiment of the method according to the invention, said first reference vector is one of said at least one second feature vector. In that case the first reference timing information may comprise the second rendering time, which may be understood as a (first) position on a reference rendering timeline. In that case, the reference rendering timeline may be understood as the rendering timeline of the multiple content parts, preferably by the second rendering device.

In this embodiment, the synchronization of the rendering of the multiple content parts by the first and second rendering device may be enabled, by capturing a certain content part, which has been rendered by both the first and the second rendering device, and by determining a time difference between the first rendering time and the second rendering time. Feature vectors are extracted and matched in order to determine that the captured first content part corresponds to the captured second content part.

In an embodiment of the method according to the invention, the method further comprises extracting said first reference feature vector from one of said multiple content parts, preferably by a first reference feature vector module. This extracting may take place without rendering and/or capturing said one of said multiple content parts.

In an embodiment of the method according to the invention, the method further comprises matching one of said at least one second feature vectors with said first reference feature vector.

It may be the case that one of the at least one first feature vector is matched with one of the at least one second feature vector via the first reference feature vector. Thus, both one of the at least one first feature vector and one of the at least one second feature vector is matched with the first reference feature vector, which may be extracted from one of said multiple content parts.

Synchronization of the rendering of the multiple content parts by the first and second rendering device may thus be enabled by comparing both the first rendering time and the second rendering time with the first position (which may be the predefined reference time) on the reference rendering timeline or by comparing the first rendering time with the second rendering time.

In an embodiment of the method according to the invention, the method further comprises:
matching one of said at least one second feature vector with a second reference feature vector, wherein said second reference feature is associated with a second reference timing information, indicating a second position on said reference rendering timeline.

It may be the case that the first content part and the second content part do not at least partially overlap or are indeed different, or comprise at least partially different media content. In that case, it may be impossible to match a first feature vector with any of the at least one second feature vector. Furthermore, it may not be possible to match both the first and the second feature vector with the first reference feature vector.

One of said at least one second feature vector may then be matched with a second reference feature vector, while one of said at least one first feature vector may then be matched with the first reference feature vector. The first and second reference feature vector are associated with a first and second reference timing information, indicating a first and second position on the reference rendering timeline, respectively. The time difference between the first and the second position on the reference rendering timeline may indicate a predefined or predetermined target time difference between the rendering of the first and second content part. This target time difference is the desired time difference that may be achieved when the rendering of multiple content parts is synchronized.

When the rendering of the first content part is synchronized with the rendering of the second content part, the time difference between the first and second position is equal to the time difference between the first and second rendering time. Therefore, the first and second timing information may be used to generate the synchronization information, which may enable the synchronization of the rendering by the first and second rendering device.

In an embodiment of the method according to the invention, the method further comprises extracting said second reference feature vector from one of said multiple content parts, preferably by a second reference feature vector extraction module. This extracting may take place without rendering and/or capturing said one of said multiple content parts. Said one content part from which the first feature vector is extracted may be different from said one content part from which the second feature vector is extracted.

In an embodiment of the method according to the invention, said first position and said second position define a time difference between said first position and said second position.

In an embodiment of the method according to the invention, generating synchronization information comprises determining a time difference between said first rendering time and said second rendering time and/or determining a time difference between said first position and said second position.

In an embodiment of the method according to the invention, generating synchronization information comprises comparing said time difference between said first position and said second position with said time difference between said first rendering time and said second rendering time.

In an embodiment of the method according to the invention, generating said synchronization information is further based on at least one of:
- said second reference timing information;
- said time difference between said first position and said second position; and,
- a time difference between said first rendering time and said second rendering time.

In general, synchronization information is information that may be used to delay (or advance) the rendering of content parts, in particular by the first and/or a second rendering device. The synchronization information may be operative in different parts of the content delivery chain. For example it may be used for delaying or advancing a content stream at a source device (e.g. an origin server or a network cache), or at any other point (device) a stream passes, such as routers, concentrators, DSLAM's settop boxes, Home Gateways and so on. As such the synchronization information may also be used advantageously by the rendering device itself for changing the timing of the rendering of content (parts). The synchronization information may further comprise said second reference timing information, said time difference between said first position and said second position and/or said time difference between said first rendering time and said second rendering time.

In an embodiment of the method according to the invention, the method further comprises: delaying the rendering of said multiple content parts, in particular by the first and/or the second rendering device based on said synchronization information.

Alternatively said rendering may be advanced by skipping the rendering of certain content parts. Yet alternatively said rendering may be delayed or advanced by delaying or advancing the streaming of the content parts to the rendering devices, preferably on the basis of said synchronization information, by any suitable device (e.g. variable delay buffers), in the path of the stream, including the source of the stream itself.

The first and/or the second rendering device may be arranged for delaying the rendering of the multiple content parts on the basis of said synchronization information. As a result, the rendering of the content parts of different streams may be synchronized.

In an embodiment of the method according to the invention, said capturing of said first content part is executed by a first capturing device and/or said capturing of said second content part is executed by a second capturing device. The first and the second capturing device may be the same capturing device or may be different devices.

In an embodiment of the method according to the invention, reception of a trigger signal may trigger at least one of the following:
- determining said first rendering time;
- generating said first captured content part;
- determining said second rendering time;
- generating said second captured content part;

In an embodiment of the method according to the invention, said trigger signal is generated by a change algorithm configured for detecting a predetermined change in the rendering of said multiple content parts. The trigger signal may be embodied in one of the multiple content parts, for example in the first and/or the second content part.

The first and/or second rendering device may be arranged for transmitting said trigger signal to the first and/or second capturing device. The first and/or second capturing device may be arranged for detecting said trigger signal.

It may be advantageous to generate the synchronization information (and execute the steps required for this) at a certain time during the rendering of the multiple content parts, for example, when it is required that the first and second content part (at least partly) overlap. Or in case a certain content part of the multiple content parts comprises one or more features that can be easily used for matching with reference feature, it may be advantageous to capture a first content part, when said content part is being rendered. For example, a relatively large change in for example the luminance or the sound may be easily detected.

In an embodiment of the method according to the invention, the first content part may comprise at least one sample, wherein preferably the number of samples per second of said first content part may be referred to as the first sample rate. The first feature vector may be extracted from one or more of said at least one sample of the first content part. Also, the second content part may comprise at least one sample, wherein preferably the number of samples per second of said second content part may be referred to as the second sample rate. The second feature vector may be extracted from one or more of said at least one sample of the second content part. The first and second sample rate may be identical.

The content part from which the first reference feature vector is extracted may comprise at least one sample, wherein preferably the number of samples per second of said content part may be referred to as the first reference sample rate. The first reference feature vector may be extracted from one or more of said at least one sample of said content part. The same apply to the second reference feature vector, mutatis mutandis. The first and/or second reference sample rate may be identical to the first and/or second sample rate.

In an embodiment of the method according to the invention, the method further comprises transmitting the multiple content parts to the first and/or second rendering device.

In an embodiment of the method according to the invention, the method further comprises delaying the transmission of the multiple content parts to the first and/or second rendering device based on said synchronization information.

According to another aspect, a program is provided having instructions adapted for carrying out any one of the embodiments of the method according to the invention.

According to another aspect, a computer readable medium, preferably non-transitory, is provided with instructions or a program recorded thereon, wherein the program is, or the instructions are arranged for making the computer execute or perform any one of the embodiments of the method according to the invention.

A computer-readable media may be any media that may be accessed by a general purpose or special purpose computer. Examples of such media are RAM, ROM, EEPROM, CD-ROM, or other optical or magnetic disk storage devices. The media may be arranged for carrying or storing computer-executable instructions or data structures.

The instructions may comprise program modules, that may be executed by processors or computers in a stand-alone or in a network environment. The instructions may be represented by program code for executing the steps of the methods, described in this document.

A connection that is transferring or providing computer-readable information over a communication network to a computer or a processor may also be understood as an example of computer-readable media.

According to another aspect, a computer program product is provided, comprising said computer readable medium, or comprising software code portions (or instructions) configured for, when run in the memory of a computer, executing any one of the method steps according to any one of embodiments according to the invention.

According to another aspect, a system is provided for enabling synchronization of rendering multiple content parts, using a reference rendering timeline, said system comprising:
- a first capturing device arranged for generating a first captured content part by capturing a first rendered content part, wherein said first rendered content part is generated by rendering a first content part of said multiple content parts by a first rendering device;
- a first determination module arranged for determining a first rendering time, indicating when said first content part was rendered by the first rendering device;
- a first feature vector extraction module arranged for extracting at least one first feature vector from said first captured content part;
- a first matching module arranged for matching one of said at least one first feature vector with a first reference feature vector, wherein said first reference feature vector is associated with a first reference timing information, indicating a first position on said reference rendering timeline; and,
- a synchronization information generator arranged for generating synchronization information for said synchronization based on the first rendering time and said first reference timing information.

In an embodiment of the system according to the invention, the first capturing device comprises the first determination module and/or the first feature vector extraction module. The first capturing device may further comprise the first matching module and/or the synchronization information generator.

In an embodiment of the system according to the invention, the system further comprises a first rendering device arranged for generating said first rendered content part by rendering said first content part.

In an embodiment of the system according to the invention, said reference timing information comprises a predefined reference time, and, preferably, generating synchronization information comprises determining a time difference between said first rendering time and said predefined reference time.

In an embodiment of the system according to the invention, the system further comprises:
- a second determination module arranged for determining a second rendering time, indicating when a second content part of said multiple content parts was rendered, preferably by a second rendering device,
wherein the first content part is provided in a first content stream to the first rendering device and the second content part is provided in a second content stream, preferably to said second rendering device,
wherein generating synchronization information is further based on said second rendering time.

In an embodiment of the system according to the invention, the system further comprises:
- a second capturing device arranged for generating a second captured content part by capturing a second rendered content part, wherein said second rendered content part is generated by rendering said second content part.

In an embodiment of the system according to the invention, the second capturing device comprises the second determination module.

In an embodiment of the system according to the invention, the system further comprises a second rendering device arranged for generating said second rendered content part by rendering said second content part.

In an embodiment of the system according to the invention, said second content part is or corresponds to said first content part.

In an embodiment of the system according to the invention, said second feature vector is or matches with said first content part. Because the first and second content part may comprise the same media content, the first and second feature vector may match with or correspond to each other.

In an embodiment of the system according to the invention, said reference timing information comprises said second rendering time, and, preferably generating synchronization information comprises determining a time difference between said first rendering time and said second rendering time.

In an embodiment of the system according to the invention, said second determination module is arranged for determining said second rendering time in accordance with a protocol, preferably a transport or streaming protocol, used for providing said second content part to said second rendering device.

In an embodiment of the system according to the invention, the system further comprises a second feature vector extraction module arranged for extracting said at least one second feature vector from said second captured content part.

In an embodiment of the system according to the invention, the second capturing device comprises said second feature vector extraction module.

In an embodiment of the system according to the invention, the second capturing device is said first capturing device.

In an embodiment of the system according to the invention, said first reference vector is one of said at least one second feature vector.

In an embodiment of the system according to the invention, the system further comprises a first reference feature extracting module arranged for extracting said first reference feature vector from one of said multiple content parts.

In an embodiment of the system according to the invention, the system further comprises a second matching module arranged for matching one of said at least one second feature vector with said first reference feature vector.

In an embodiment of the system according to the invention, the system comprises a second matching module arranged for matching one of said at least one second feature vector with a second reference feature vector, wherein said second reference feature is associated with a second reference timing information, indicating a second position on said reference rendering timeline.

In an embodiment of the system according to the invention, the second capturing device comprises said second matching module.

In an embodiment of the system according to the invention, said second matching module is said first matching module. In other words both modules may relate to the same (microprocessor) circuitry and/or software-hardware based functionality implemented on the same computer, which may for example be a capturing device, or synchronization server according to the invention.

In an embodiment of the system according to the invention, the system further comprises a second reference feature extracting module arranged for extracting said second reference feature vector from one of said multiple content parts.

The second reference feature vector extraction module may be the first reference feature vector extraction module, i.e. it may be same module.

In an embodiment of the system according to the invention, said first position and said second position define a time difference between said first position and said second position.

In an embodiment of the system according to the invention, generating synchronization information comprises determining a time difference between said first rendering time and said second rendering time and/or determining a time difference between said first position and said second position.

In an embodiment of the system according to the invention, generating synchronization information is further based on at least one of:
- said second reference timing information;
- said time difference between said first position and said second position; and,
- a time difference between said first rendering time and said second rendering time.

In an embodiment of the system according to the invention, the synchronization information generator is arranged for transmitting the synchronization information, for example to the first and/or second rendering device. The first and/or second rendering device may be arranged for delaying the respective rendering of the multiple content parts based on the synchronization information.

In an embodiment of the system according to the invention, the second rendering device is the first rendering device. The first content part may be a video content part and the second content part may be an audio content part.

In an embodiment of the system according to the invention, the second capturing device is the first capturing device. Also, the second determination module may be the first determination module. The second feature vector extraction module may be the first feature vector extraction module. The second matching module may be the first matching module.

In an embodiment of the system according to the invention, the system further comprises:
- a first media source module for providing said first content part (for example in a first media stream) to said first rendering device; and/or
- a second media source module for providing said second content part (for example in a second media stream) to said second rendering device.

The second media source module may be the first media source module. The system may comprise a media server comprising the first and/or the second media source module.

In a further embodiment, the media server, or in particular the first and/or the second media source module, is arranged for providing or transmitting the multiple content parts, preferably as one or more media streams, to the first and/or second rendering device. The media server, or in particular the first and/or the second media source module, may be arranged for delaying the rendering of the multiple content parts on the basis of the synchronization information. In this embodiment the delaying of the rendering is performed indirectly by delaying the providing or transmission of the multiple content parts to the first and/or the second rendering device. This has the advantage that the rendering devices need not receive or be capable of receiving and processing the synchronization information.

The media server, or, in particular the first and/or second media source module, may be arranged for generating and/or transmitting said trigger signal to the first and/or the second capturing device and/or to the first and/or the second rendering device.

In an embodiment of the system according to the invention, the system further comprises a synchronization server comprising at least one of:
- said first feature vector extraction module;
- said second feature vector extraction module;
- said first determination module;
- said second determination module;
- said first matching module;
- said second matching module;
- said synchronization information generator.

The modules as described in this document may be arranged in all kind of devices, for example: in the first rendering device, in the second rendering device, in the first capturing device, in the second capturing device, in the media server, in the synchronization server, etc.

In an embodiment of system according to the invention, the first capturing device is arranged for transmitting the first captured content part, the at least one first feature vector, the first rendering time, and/or the first reference timing information, preferably to the synchronization server.

In an embodiment of system according to the invention, the second capturing device is arranged for transmitting the second captured content part, the at least one second feature vector, the second rendering time, and/or the second reference timing information, preferably to the synchronization server.

In an embodiment of system according to the invention, the system further comprises a first buffer module arranged for buffering the first media stream in order to delay the rendering of the multiple content parts by the first rendering device. The system may comprise a second buffer module arranged for buffering the second media stream in order to delay the rendering of the multiple content parts by the second rendering device. The first buffer module and/or the second buffer module may be arranged in a buffer device, in a media server, in or, respectively, in the first and the second rendering device.

The first buffer module and/or the second buffer module may be arranged for receiving the synchronization information and for adjusting the buffering of the first and/or second media stream on the basis of said synchronization information. The synchronization server may be arranged for transmitting the synchronization information to the first and/or second buffer module.

The second buffer module may be the first buffer module, i.e. the first and second buffer module may be embodied in a single buffer module.

It may be possible to provide a third party service for synchronization, since the adjustments of the network providing the first and the second media stream to a first and second rendering device may be limited: only one or two capturing devices and the synchronization server need to be provided, when one or more buffer modules (in one or more of the device) are available for delaying the rendering.

The effects and advantages of embodiments of the system according to invention may be the same as the effects and advantages of corresponding embodiments of the method according to invention, mutatis mutandis. Also features of embodiments of the method according to the invention may also be applied to the embodiment of the system according to the invention, mutatis mutandis.

According to another aspect of the invention, a capturing device is provided for synchronization of rendering multiple content parts, using a reference rendering timeline,
said capturing device arranged for generating a first captured content part by capturing a first rendered content part, wherein said first rendered content part is generated by rendering a first content part of said multiple content parts by a first rendering device;
said capturing device comprising:
- a first feature vector extraction module arranged for extracting at least one first feature vector from said first captured content part and, preferably for transmitting said at least one first feature vector to a first matching module;
and optionally one of:
- a first determination module arranged for determining a first rendering time, indicating when said first content part was rendered by the first rendering device and, preferably for transmitting said first rendering time to a synchronization information generator;
- said first matching module arranged for matching one of the at least one first feature vector with a first reference feature vector,
wherein said first reference feature vector is associated with a first reference timing information, indicating a first position on said reference rendering timeline; and,
- said synchronization information generator arranged for generating synchronization information for said synchronization based on the first rendering time and said first reference timing information.

It may be the case that the capturing device does not comprise first matching module and/or does not comprise the synchronization information generator. The first matching module and/or the synchronization information generator may be comprised in another device, such as a synchronization server, as described in this document, or in a media server, as described in this document. The first feature vector extraction module may then be arranged for transmitting the at least one first feature vector to the first matching module. The first determination module may then be arranged for transmitting the first rendering time to the synchronization information generator.

In an embodiment of the capturing device according to the invention, the capturing device is further arranged for generating a second captured content part by capturing a second rendered content part, wherein said second rendered content part is generated by rendering a second content part of said multiple content parts, preferably by a second rendering device,
wherein the first content part is provided in a first content stream to the first rendering device and the second content part is provided in a second content stream, preferably to said second rendering device,
and the capturing device further comprises at least one of:
- a second determination module arranged for determining a second rendering time, indicating when said second content part was rendered by the second rendering device;
- a second feature vector extraction module arranged for extracting at least one second feature vector from said second captured content part;
- a second matching module arranged for matching one of said at least one second feature vector with said first reference feature vector, or, with a second reference feature vector, wherein said second reference feature vector is associated with a second reference timing information, indicating a second position on said reference rendering timeline.

The effects and advantages of embodiments of capturing device according to invention may be the same as the effects and advantages of corresponding embodiments of the method or system according to invention, mutatis mutandis. Also features of embodiments of the method or system according to the invention may also be applied to the embodiment of the capturing device according to the invention, mutatis mutandis.

According to a another aspect of the invention, a synchronization server device is provided for enabling synchronization of rendering multiple content parts, using a reference rendering timeline, said synchronization server comprising at least one of:
- a first matching module arranged for matching one of at least one first feature vector with a first reference feature vector,
wherein said first reference feature vector is associated with a first reference timing information, indicating a first position on said reference rendering timeline; and,
wherein said at least one first feature vector is extracted from a first captured content part, wherein said first captured content part is generated by capturing a first rendered content part, wherein said first rendered content part is generated by rendering said first content part by a first rendering device;
- a synchronization information generator arranged for receiving a first rendering time, indicating when a first content part of said multiple content parts was rendered by the first rendering device and for generating synchronization information for said synchronization based on the first rendering time and said first reference timing information.

In an embodiment the first matching module may be arranged for receiving the at least one first feature vector from the first feature vector extraction module, which may be comprised in another device such as the first capturing device.

It may be the case that the first determination module arranged for determining said first rendering time is not comprised in the synchronization server but in another device, for example in a first capturing device. In that case, the capturing device may be arranged for transmitting the first rendering time to the synchronization information generator, which may be arranged for receiving said first rendering time.

In an embodiment of the synchronization server according to the invention, the synchronization server further comprises at least one of:
- a first determination module arranged for determining said first rendering time.
- a first feature vector extraction module arranged for extracting said at least one first feature vector from said first captured content part;
- a second determination module arranged for determining a second rendering time, indicating when a second content part of said multiple content parts was rendered, preferably by a second rendering device, wherein the first content part is provided in a first content stream to the first rendering device and the second content part is provided in a second content stream, preferably to said second rendering device;- a second feature vector extraction module arranged for extracting at least one second feature vector from a second captured content part, wherein said second captured content part is generated by capturing a second rendered content part, wherein said second rendered content part is generated by rendering said second content part, preferably by the second rendering device
- a second matching module arranged for matching one of said at least one second feature vector with said first reference feature vector, or, with a second reference feature vector, wherein said second reference feature vector is associated with a second reference timing information, indicating a second position on said reference rendering timeline.

In an embodiment of the synchronization server according to the invention, the synchronization server further comprises a transmission module for transmitting the synchronization information, for example to a media server.

The effects and advantages of embodiments of synchronization server according to invention may be the same as the effects and advantages of corresponding embodiments of the capturing device, method or system according to invention, mutatis mutandis. Also features of embodiments of the capturing device, method or system according to the invention may also be applied to the embodiment of the synchronization server according to the invention, mutatis mutandis.

Embodiments of the capturing device and/or synchronization server according to the invention may correspond to the embodiments of the capturing devices and/or synchronization servers as described in relation with the system and/or method according to the invention.

The various aspects and features described and shown in the specification can be applied, individually, wherever possible.

### BRIEF DESCRIPTION OF THE DRAWINGS

The invention will be elucidated on the basis of an exemplary embodiment shown in the attached drawings, in which:
Figure 1 shows a schematic illustration of an embodiment of the system for enabling synchronization of rendering multiple content parts according to the invention;
Figure 2 illustrates the step of generating synchronization information for the synchronization according to an embodiment of the invention;
Figure 3 shows a schematic illustration of another embodiment of the system for enabling synchronization of rendering multiple content parts according to the invention;
Figure 4 illustrates the step of generating synchronization information for the synchronization according to another embodiment of the invention;
Figure 5 illustrates the step of generating synchronization information for the synchronization according to another embodiment of the invention;
Figure 6 shows a schematic illustration of another embodiment of the system for enabling synchronization of rendering multiple content parts according to the invention;
Figure 7 illustrates the step of generating synchronization information for the synchronization according to another embodiment of the invention;
Figure 8 illustrates the step of generating synchronization information for the synchronization according to another embodiment of the invention;
Figure 9 shows a schematic illustration of another embodiment of the system for enabling synchronization of rendering multiple content parts according to the invention;
Figure 10 shows a schematic illustration of an embodiment of the capturing device for enabling synchronization of rendering multiple content parts according to the invention;
Figure 11 shows a schematic illustration of an embodiment of the synchronization server for enabling synchronization of rendering multiple content parts according to the invention;
Figure 12 shows a schematic illustration of an embodiment of the media server for enabling synchronization of rendering multiple content parts according to the invention; and,
Figure 13 shows a schematic illustration of an embodiment of the method for enabling synchronization of rendering multiple content parts according to the invention.

### DETAILED DESCRIPTION OF THE INVENTION

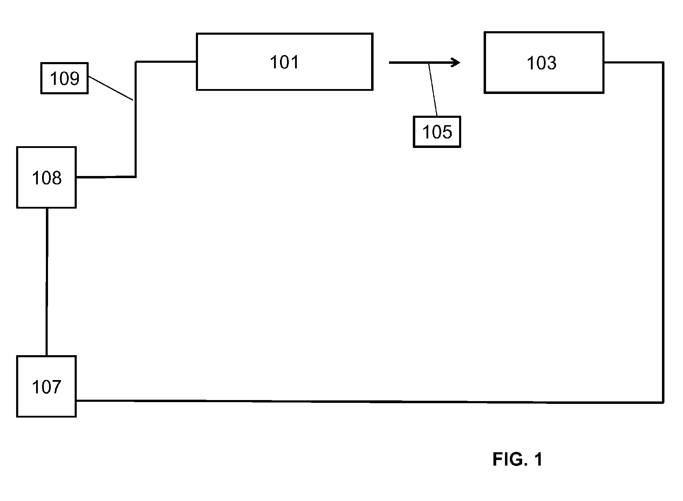

Figure 1 shows a schematic illustration of an embodiment of the system for synchronization of rendering of multiple content parts according to the invention. Said system may comprise a first rendering device 101, arranged for rendering content parts. The first rendering device 101 may be a television or desktop computer with a monitor. The rendering device 101 may be arranged for generating stimuli 105, based on the multiple content parts, such as sound and light, such that the multiple content parts by rendering them become perceptible for humans.

In the example of figure 1, the first rendering device 101 may receive multiple content parts from a media server 108 via a first media stream 109. The media server 108 may comprise a first media source module 120 for providing a first content part in a first media stream 109 to the first rendering device 101.

The media server 108 may store the multiple content parts, typically in a digital encoded and compressed form, such as jpeg, MPEG, mp3, aac, dts, dolby digital for pictures, audio and video that is optimized for storage, distribution and/or reproduction. The first (and/or second) content part may be comprised in the multiple content parts that are stored in the media server 108.

A first capturing device 103 may be provided. The first capturing device may be arranged for generating a first captured content part by capturing a first rendered content part, wherein the first rendered content part is obtained by rendering the first content part by the first rendering device. The capturing device 103 may be arranged for capturing the generated stimuli 105. A capturing device may comprise a camera and/or a microphone. The capturing device may be a mobile phone, a tablet computer or a laptop.

In general, a captured content part may be an audio and/or video file containing data corresponding to at least a portion of the rendered content part.

A first rendering time may be determined, preferably by a first determination module 150, wherein the first rendering time indicates when the first content part was rendered. The first determination module 150 may be provided in the first rendering device. In that case the first rendering time may be the actual time on which the first content part was rendered. Alternatively, the first determination module may be provided in the first capturing device. In that case, the first rendering time may be the time on which the first rendered content part was received or captured by the first rendering time. The time difference between the receiving/capturing of the rendered content part and the actual rendering of the first content part may be small and/or, for the purpose of synchronization, negligible.

From the first captured content part, at least one first feature vector may be extracted, for example by a first feature vector extraction module 130. The first feature vector extraction module may be arranged in the first capturing device 103 or in a synchronization server 107.

In case the synchronization server 107 comprises the first feature vector extraction module 130, the first capturing device 103 may be arranged for transmitting the first captured content part to the synchronization server, in particular to the first feature vector extraction module 130 in the synchronization server.

The first determination module 150 may also be comprised in the synchronization server 107. The first rendering time may then be the time the synchronization server 107, or in particular the first feature vector extraction module 130, receives the first captured content part. The time difference between the receiving of the first captured content part and the actual rendering of the first content part may be small and/or, for the purpose of synchronization, negligible.

The first determination module may be arranged for transmitting the first rendering time, preferably to the synchronization information generator.

A feature may refer to a characteristic of a content part, for example the average sound level, or the average intensity of a color, in particular in a predefined area of an image. Values of the characteristic may be determined and arranged in the form of a vector, thus forming a feature vector. It may be the case that a feature vector comprises only one value, corresponding to a single characteristic. Feature vectors may be arranged in a sequence, thus forming a feature vector sequence.

One of the at least one first feature vector may be matched with a first reference feature vector, by a first matching module 140. The first capturing device 103 or the synchronization server 107 may comprise the first matching module 140.

For example, the first feature vector may comprise numbers indicating the average light intensity (and/or the change of the average light intensity) of the first captured content part, said captured content part being a video content part.

A reference feature vector, or in particular, a first reference feature vector, may comprise numbers that at least partially correspond to the same features as the numbers of the first feature vector correspond to.

When a difference between these numbers and numbers contained in the first reference feature vector is below a predefined threshold, the first feature vector and the first reference feature vector may be said to match. Instead of the numbers of the first feature vector and/or the first reference feature vector also the respective results of a calculation based on said actual numbers may be used for matching.

The first reference feature vector may be associated with a first reference timing information, indicating and/or comprising a first position on a reference rendering timeline. The first position may be related to a predefined reference time on which the first content part should have been rendered by the first rendering device when synchronized. The reference timing information may comprise the predefined reference time.

A time difference may be determined, preferably by a synchronization information generator 160, between said first rendering time and said predefined reference time. In an embodiment, said first position is the predefined reference time.

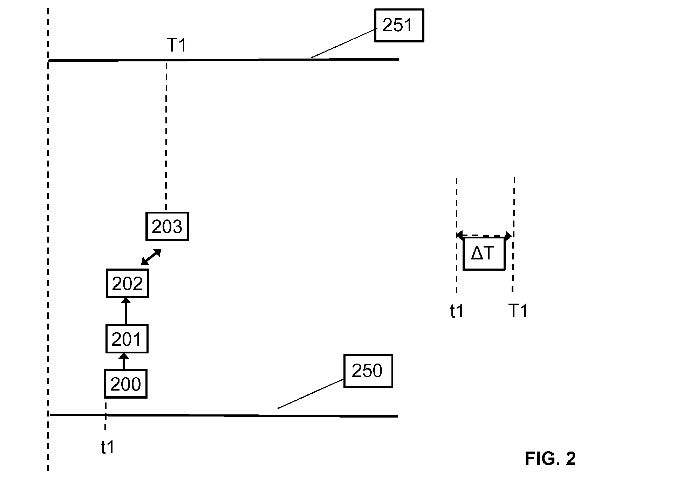

This is illustrated in figure 2. First content part 200 is rendered at time t1 according to a first rendering timeline 250. A first captured content part 201 is generated by capturing said first rendered content part. From the first captured content part 201, at least one first feature vector 202 is extracted, which is matched with first reference vector 203. First reference vector 203 is associated with a first position T1 on the reference rendering timeline 251. A time difference ΔT between may be calculated between T1 en t1.

The first rendering time t1 may not be (equal to) the actual time that the first content part was rendered. The time difference between these two may not be negligible. In that case, when this difference is predetermined or known in advance, it may be added to the first rendering time t1.

In general, the time difference ΔT may be the time period by which the rendering of the multiple content part, in particular by the first rendering device, should be delayed to obtain synchronization. Therefore, generating synchronization information indicating and/or comprising this time difference ΔT may be used to synchronize the rendering of the multiple content parts.

The synchronization information generator 160 may generate synchronization information based on, comprising, or being identical to, said time difference ΔT. The synchronization server 107 may comprise said synchronization information generator.

The synchronization information may be sent to the media server 108, or in particular to the first media source module, to delay the transmitting of the multiple content parts to the first rendering device, in order to obtain synchronization.

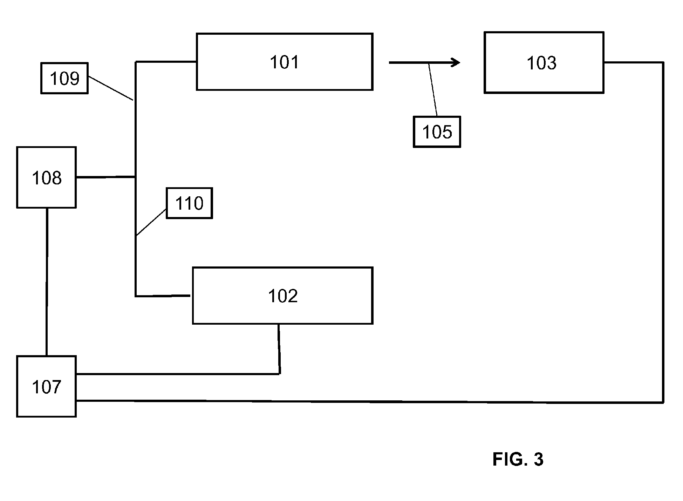

Figure 3 shows a schematic illustration of another embodiment of the system for synchronization of rendering of multiple content parts according to the invention. In this embodiment, in addition to the embodiment of figure 1, at least some of the multiple content parts are also rendered by a second rendering device 102. They may be provided by the media server 108, or in particular by a second media source module 121, to the second rendering device 102 via a second media stream 110.

The second rendering time may indicate when a second content part of said multiple content parts was rendered by the second rendering device, as the first rendering time indicates when the first content part is rendered by the first rendering device. A second determination module 151 may be provided for determining the second rendering time. The second determination module 151 may be provided in the second rendering device 102, in the second capturing device 104 or in the synchronization server 107.

The second determination module may be arranged for transmitting the second rendering time, preferably to the synchronization information generator.

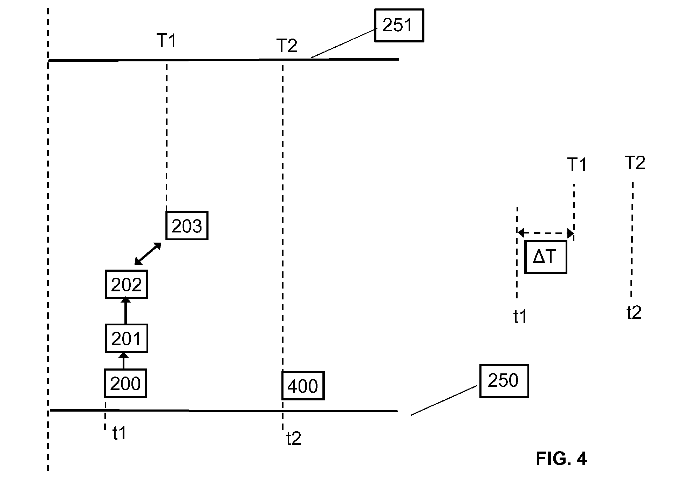

Figure 4 illustrates generating synchronization information for the synchronization according to an embodiment of the invention, which may correspond to the embodiment of figure 3.

In figure 4, in addition to the illustration of figure 2, a second content part 400 is rendered at a second rendering time t2, preferably by the second rendering device 102. The second rendering time may be determined in accordance with a protocol, preferably a transport or streaming protocol, used for providing said second content part to said second rendering device.

Based on said protocol, it may be determined that the second content part is associated with a second position T2 on the reference rendering timeline 251. A first time difference between the first position T1 and the second position T2 may indicate the time difference in the rendering of the first and second content part, according to the reference rendering timeline 251.

In general, the reference rendering timeline may be a rendering timeline defined by the media content itself, or it may be defined by the media server, when transmitting the multiple content parts.

A second time difference may be defined as the time difference between the first rendering time t1 and the second rendering time t2. The second time difference may indicate the actual time difference between the rendering of the first and second content parts.

It may be understood that said first time difference would be equal to said second time difference, when the rendering of the first and second content parts are synchronized. Therefore, it may be useful to determine a time difference ΔT between said first and second time difference, as is indicated in figure 4. In the example of figure 4, the time difference ΔT may indicate or may be equal to the time period that the rendering of the first content part should be delayed to obtain synchronization.

The time difference ΔT may be used to generate the synchronization information, in particular, the synchronization information may comprise said time difference ΔT.

In an embodiment, the first content part is, at least partially, equal to the second content part. Or it may be the case that the first and second content part ar least partially comprise the same media content. In that case, the second position T2 may be equal to, or coincides with, the first position T1. In that case, the time difference ΔT equals the second time difference between the rendering of the first and second content parts.

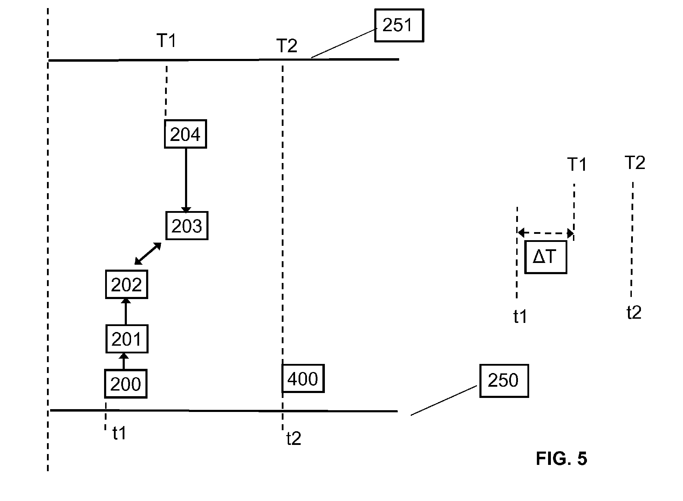

Figure 5 illustrates generating synchronization information for the synchronization according to another embodiment of the invention, which may correspond to the embodiment of figure 3.

In figure 5, the first reference feature vector 203 is extracted from one of said multiple content parts. This one of said multiple content parts may be referred to as the first reference content part 204. The first reference content part 204 may be associated with the first position T1 on the reference rendering timeline. Thus, also the first reference feature vector 203 is associated with the first position T1. A first reference feature vector extraction module 133 may be arranged for extracting said first reference feature vector from said first reference content part 204. Said first reference feature vector extraction module 133 may be comprised in the synchronization server 107 or in the media server 108.

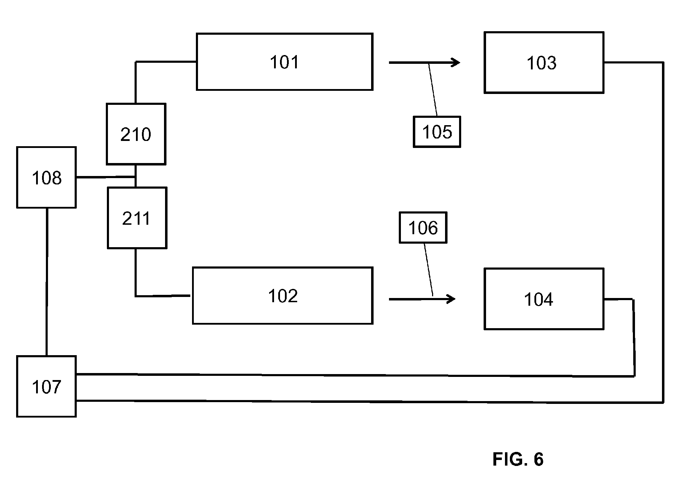

Figure 6 shows a schematic illustration of another embodiment of the system for enabling synchronization of rendering multiple content parts according to the invention.

In addition of the embodiment of figure 3, the first content part may be provided to the first rendering device 101 from media server 108 via a first buffer module 210. The first buffer module 210 may be arranged for buffering the first media stream. By buffering the first media stream, the rendering thereof by the first rendering device 101 may be delayed.

The second content may be provided to the second rendering device 201 from media server 108 via a second buffer module 211. The second buffer module 211 may be arranged for buffering the second media stream. By buffering the second media stream, the rendering thereof by the second rendering device 102 may be delayed.

It may be understood that such buffer modules may also be applied in the embodiments of figures 1, 3 and 9 and other embodiments described in this document.

The first buffer module 210 may be comprised in the media server 108, in the first rendering device 101 or in another device. The second buffer module 211 may be comprised in the media server 108, in the second rendering device 102, in the same device as the first buffer module 210 or in yet another device. Furthermore, a second capturing device 104 is provided for capturing the stimuli 106, which may be generated by the second rendering device when rendering the second content part. The second capturing device 104 is thus arranged for generating a second captured content part by capturing the second rendered content part. The second rendered content part is generated by rendering a second content part of said multiple content parts, preferably by the second rendering device 102.

The second capturing device 104 may the same device as the first capturing device 103.

From the second captured content part, at least one second feature vector may be extracted, preferably by a second feature vector extraction module 131.

The second feature vector extraction module 131 may be comprised in the second capturing device 104 or in the synchronization server 107. In the latter case, the second rendering device 102 may be arranged for transmitting the second captured content part to the synchronization server, in particular to the second feature vector extraction module.

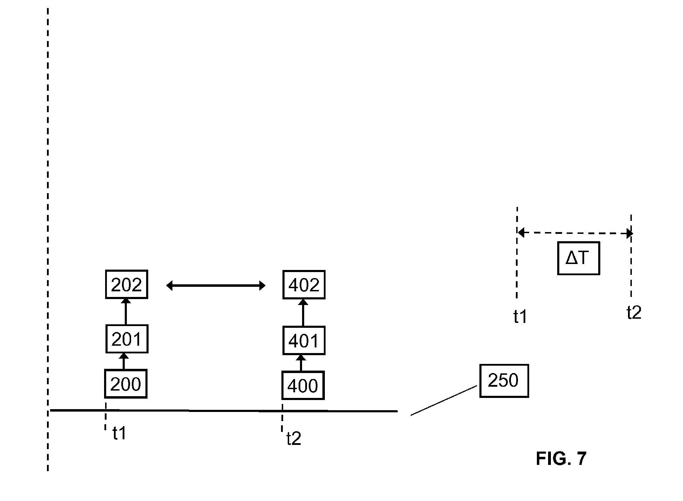

In an embodiment, one of the at least one second feature vector is said first reference feature vector. And in figure 7 an illustration is provided for generating synchronization information for the synchronization according to that embodiment of the invention.

In figure 7, the second content part 400 may be rendered at time t2. From a second rendered content part, a second captured content part 401 may be generated. From the second captured content part 401 at least one second feature vector 402 may be extracted.

In the embodiment of figure 7, the first feature vector 202 is matched with the second feature vector 402, serving as the first feature vector 203. The first reference timing information, now associated with the second feature vector 401, may indicate a first position on a reference rendering timeline. In the embodiment of figure 7, said first position may be understood as the second rendering time t2 on the rendering timeline 250.

It may be understood, that, when the first feature vector 202 is matched with the second feature vector 402, the second content part 400 at least partially overlaps with, or is equal to, the first content part 200 or at least partially comprises the same media content.

In figure 7, the time difference ΔT may indicate a time difference between the rendering of the first content part by the first rendering device 101 and the rendering of the same (or corresponding) content part, i.e. the second content part (or at least overlapping content parts) by the second rendering device 102.

In general, two content parts may be said to overlap, when the two content part comprise or correspond with, at least partially, the same media content, for example one or more video frames.

In figure 7, the time difference ΔT may thus indicate the time period the rendering of the multiple content parts by the second rendering device 102 should be delayed to obtain synchronization. Thus synchronization information may be generated based on said time difference ΔT.

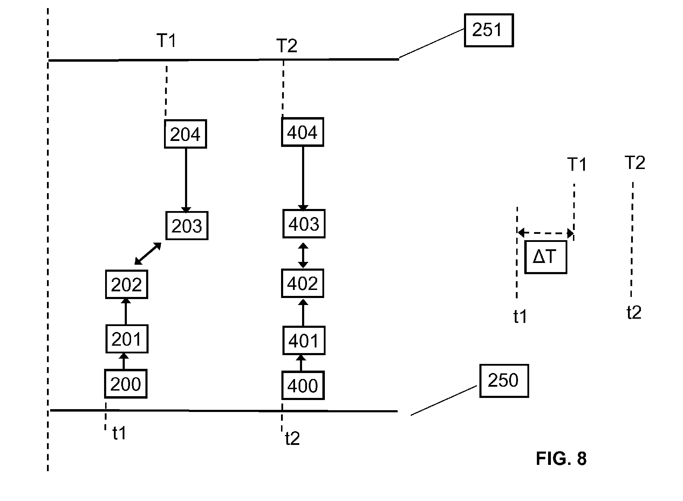

Figure 8 illustrates generating synchronization information for the synchronization according to another embodiment of the invention. In contrast to the embodiment of figure 7, in figure 8, the second feature vector 402 is not used as a first reference feature vector, but is matched with a second reference feature vector 403. This matching may be performed by a second matching module. The second reference feature vector 403 may be associated with a second reference timing information, indicating a second position T2 on said reference rendering timeline 251.

The second reference feature vector 403 may be extracted from one of the multiple content parts, which may be referred to as the second reference content part 404. A second reference feature vector extraction module 134 may be arranged for extracting said second reference feature vector from said second reference content part 404. Said second second reference feature vector extraction module 134 may be comprised in the media server 108 or in the synchronization server 107.

Again, a first time difference between the first position T1 and the second position T2 may indicate the time difference in the rendering of the first and second content part, according to the reference rendering timeline 251. A second time difference between the first rendering time t1 and the second rendering time t2 may indicate the actual time difference between the rendering of the first and second content parts.

When the rendering of the first and second content parts are synchronized, said first time difference would be equal to said second time difference. A time difference ΔT may determined between said first and second time difference, as is indicated in figure 8 and may indicate or may be equal to the time period that the rendering by the first rendering device should be delayed to obtain synchronization.

In an embodiment, the first reference feature vector may be identical to or corresponds to the second reference feature vector. Furthermore, the first reference content part 204 may be identical to the second reference content part 404. Also, the first position T1 may be identical to the second position T2.

In that case, the first content part 200 may, at least partially, overlap with the second content part 400. The time difference ΔT may be equal to said second time difference, i.e. the time difference between the first rendering time and the second rendering time.

Delaying the rendering of multiple content parts by the first and/or second rendering device may be achieved by using the first and/or second buffer module 210, 211. The buffer modules may be provided in the media server 108, in the respective rendering device, and/or as a stand alone device.

The synchronization information, generated by the synchronization information generator 160, may be sent to one of the buffer modules 210, 211, and the said buffer module may delay the transmission of the respective media stream (or multiple content parts) in order to delay the rendering thereof, based on said synchronization information.

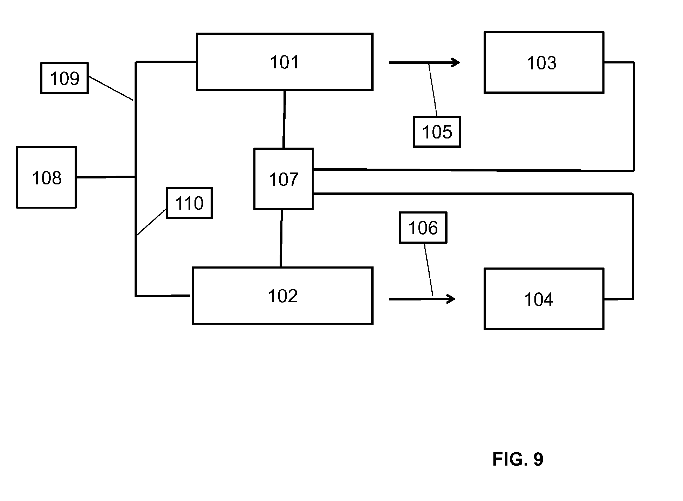

Figure 9 shows a schematic illustration of another embodiment of the system for enabling synchronization of rendering multiple content parts according to the invention. The embodiment of figure 9 is identical to the embodiments of figure 6, except that the synchronization server 108, or in particular the synchronization information generator 160, does not provide the synchronization information to the media server, or in particular to one of the media source modules, but directly to one or more of the rendering devices 101, 102, or in particular to a respective buffer module comprised in the rendering device. In that case, one or more of the rendering devices 101, 102 is arranged for delaying the respective rendering on the basis of said synchronization information.

In general, when determining a time, a clock that has been synchronized using the Network Time Protocol (NTP) may be used or any other clock synchronization protocol. In that way, associated clock times determined by different devices and/or modules may be compared with each other, since they refer to the same (mother) clock.

In general, when transmitting information, for example one or more feature vectors, a rendering time or a captured content part, between two or more of the described modules, one or more of the following technologies may be used:
- web-based technologies such as Websockets (RFC 6455), HTTP, FTP;
- real-time video call technologies such as H.324 or Skype or telephone call technologies, when for example, a captured content part is transmitted;
- messaging technologies like E-mail, XMPP, MMS.

When the information that is transmitted comprises synchronization information or other information indicating the required delay in the rendering, one or more of the following (LAN) technologies may be used, preferably in order to control the rendering by one or more of the rendering devices:
- DLNA (such as used by the Samsung Remote App);
- Digital Audio Control Protocol (Used by Apple for the Remote app);
- Infra-red remote controller (IR) (already used by some Sony tablets);
- WiFi Direct and Miracast;
- Wireless HDMI CEC;
- Websockets (RFC 6455); and,
- Central web- or messaging server.

In general, generating synchronization information may be trigged by trigger signal, sent to the respective modules, devices, and/or generators. The trigger signal may be generated by the media server 108, in particular the first and/or second media source module, or by the synchronization server. The trigger signal may be generated using a change algorithm configured for detecting a predetermined change in the rendering of the multiple content parts, or a predetermined change in one of the (predetermined) features. For example: a change in the (average) loudness of a sound, the luminance of the light, time derivative of the luminance and/or the spectrum of the light.

The trigger signal may be embodied in one of the multiple content parts, for example in the first and/or the second content part or in the first and/or second rendered content part. The trigger signal may also be generated out of band, for example by users via a text message, twitter message or a phone call.

The first and/or second capturing device may be arranged for detecting said trigger signal.

In general, it may the case that a captured content part may not only comprise data which corresponds to the rendered content part, but also additional data. For example, when the rendering device is a TV and the capturing device is a phone or a tablet computer with a camera, it may be expected that the captured content part also comprises additional data corresponding to the environment in which the TV is placed. The audio portion of a captured content part may not only comprise data corresponding to the audio of the rendered content part but also additional data corresponding to background noise.

Therefore, it may be advantageous reduce the amount of additional data in the data of the captured content part and/or to process the captured content part in order to filter out the additional data.

The capturing device may comprise a display arranged for displaying a live view of the captured content part during the capturing. The display of the capturing device may indicate (for example by showing a rectangle on the display) how to direct (or point) the capturing device towards the rendering device in order to minimize the amount of additional data.

Alternatively or additionally, the capturing device may be arranged for instructing the user to indicate the corners of a rectangle on the live view, wherein said rectangle encloses the rendered content part.

Furthermore, in order to filter out the additional data, video analysis may be performed on the data of the captured content part to identify the data corresponding to a rendered content part. For instance, by using motion detection, background subtraction and shape recognition technologies, the data corresponding to the rendered content part may be distinguished from the additional data.

Thus, the first and/or the second feature vector extraction module may further be arranged for identifying the respective content part data in the respective captured content part, wherein the respective content part data corresponds to the respective rendered content part, and/or for filtering out the additional data from the respective captured content part, wherein the additional data corresponds to (or is generated by) a surrounding of the respective rendering device.

In that case, the respective feature vector extraction module may be arranged for extracting at least one feature vector of said captured content part on the basis of the identified content part data.

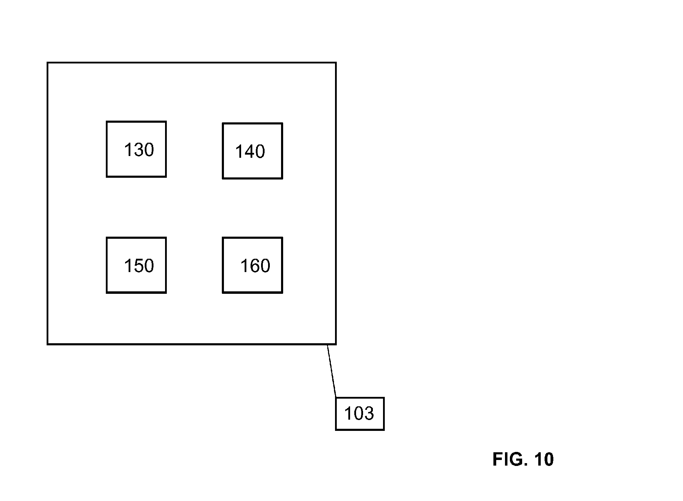

Figure 10 shows a schematic illustration of an embodiment of the first capturing device 103 according to the invention. In this embodiment, the capturing device 103 is arranged for generating a first captured content part 201 by capturing a first rendered content part, wherein said first rendered content part is generated by rendering a first content part of said multiple content parts by a first rendering device 101.

The second capturing device may be the first capturing device, i.e. the same device.

The first capturing device 103 may comprise a first feature vector extraction module 130 arranged for extracting at least one first feature vector, preferably from said first captured content part 201 as described above.

The first capturing device 103 may comprise the first feature vector extraction module 130, the second feature vector extraction module 131, the first reference feature vector extraction module 133 and/or the second reference feature vector extraction module 134. In general, at least two of these modules 134 may refer to the same module.

The first capturing device 103 may further comprise the first matching module 140, the second matching module 141, the first determination module 150, the second determination module 151, and/or the synchronization information generator 160, as described above.

In general, the first matching module 140 may be the second matching module 141, i.e. the same module. The second determination module 151 may be the first determination module 150, i.e. the same module.

The first capturing device 103 may be arranged for transmitting the first captured content part to the first feature vector extraction module 130, especially when the first feature vector extraction module 130 is not comprised in the capturing device 103, but for example in the synchronization server 107 or in the media server 108.

The first capturing device 103 may be arranged for transmitting the at least one first feature vector to the first matching module 140, especially when the first matching module 140 is not comprised in the capturing device 103, but for example in the synchronization server 107 or in the media server 108.

What is described with respect to the first capturing device 103 may also be applicable to the second capturing device 104, mutatis mutandis.

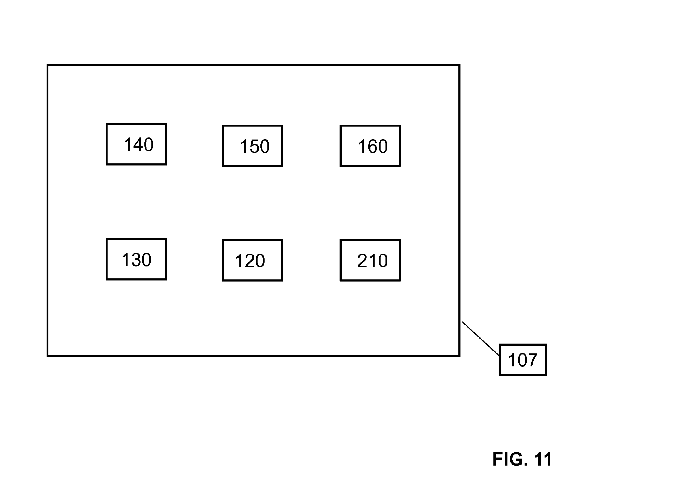

Figure 11 shows a schematic illustration of an embodiment of the synchronization server 107 for enabling synchronization according to the invention. The synchronization server 107 may comprise the first matching module 140, the second matching module 141, the first determination module 150, the second determination module 151 and/or the synchronization information generator 160, as described above.

The synchronization server 107 may further comprise the first feature vector extraction module 130, the second feature vector extraction module 131, the first reference feature vector extraction module 133 and/or the second reference feature vector extraction module 134.

Moreover, the synchronization server 107 may comprise the first media source module 120, the second media source module 121, the first buffer module 210, and/or the second buffer module 211, as described above.

In general, the first media source module 120 may be the second media source module 121, i.e. the same module. The first buffer module 210 may be the second buffer module 211, i.e. the same module.

The first feature vector extraction module 130 may be arranged for receiving the first captured content part, for example from the first capturing device 103.

The first matching module 140 may be arranged for receiving the at least one first feature vector, for example from the first feature vector extraction module 130 that is comprised in the first capturing device 103.

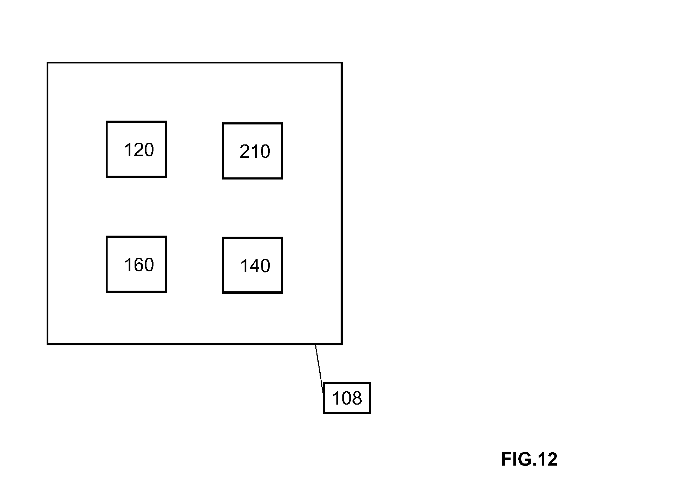

Figure 12 shows a schematic illustration of an embodiment of the media server for enabling synchronization according to the invention.

The media server 108 may comprise the first media source module 120, the second media source module 121. In general, the first media source module 120 may be the second media source module 121, i.e. the same module.

The media server 108 may further comprise the first feature vector extraction module 130, the second feature vector extraction module 131, the first reference feature vector extraction module 133 and/or the second reference feature vector extraction module 134.

The media server 108 may further comprise the first matching module 140, the second matching module 141, the first determination module 150, the second determination module 151 and/or the synchronization information generator 160, as described above.

The media server 108 may further comprise the first buffer module 210 and/or the second buffer module 211. In general, the first buffer module 210 may be the second buffer module 211, i.e. the same module.

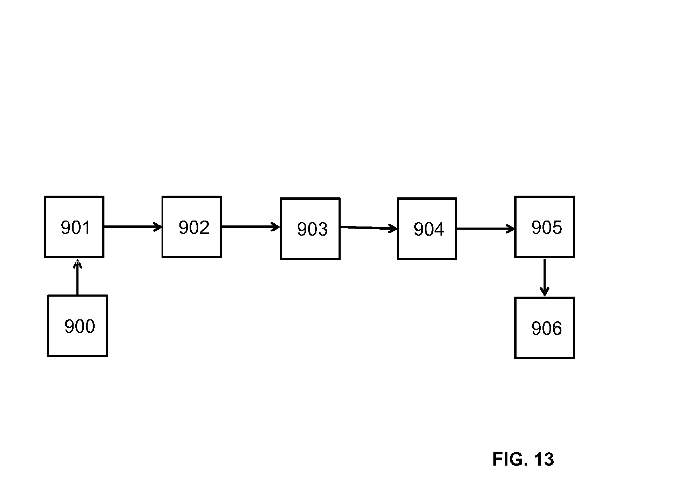

Figure 13 shows a schematic illustration of an embodiment of the method for enabling synchronization according to the invention.

In the embodiment of figure 9, the method comprises the steps of:
- generating (901) a first captured content part by capturing a first rendered content part, wherein said first rendered content part is generated by rendering a first content part of said multiple content parts by a first rendering device;
- determining (902) a first rendering time, indicating when said first content part was rendered by the first rendering device;
- extracting (903) at least one first feature vector from said first captured content part;
- matching (904) one of said at least one first feature vector with a first reference feature vector, wherein said first reference feature vector is associated with a first reference timing information, indicating a first position on said reference rendering timeline;
- generating (905) synchronization information for said synchronization based on the first rendering time and said first reference timing information.

The method may further comprise:
- delaying (906) the rendering of content parts by the first second rendering device based on said synchronization information.

The method may further comprise one or more of the following steps:
- generating (900) said first rendered content part by rendering a first content part of said multiple content parts by a first rendering device.
- generating a second rendered content part by rendering a second content part of said multiple content parts, preferably by a second rendering device,
wherein the first content part is provided in a first content stream to the first rendering device and the second content part is provided in a second content stream, preferably to said second rendering device,
- determining a second rendering time, indicating when the second content part was rendered,
- generating a second captured content part by capturing said second rendered content part;
- extracting at least one second feature vector from said second captured content part.
- matching one of said at least one second feature vectors with said first reference feature vector, or, matching one of said at least one second feature vector with a second reference feature vector, wherein said second reference feature is associated with a second reference timing information, indicating a second position on said reference rendering timeline.

In summary, the invention may be described as relating to a method, a system, a capturing device and a synchronization server for enabling synchronization of rendering of multiple content parts by a first rendering device, using a reference rendering timeline. A first content part of said multiple content parts is rendered. The first rendered content is captured and at least one first feature vector is extracted from said first captured content part. One of the at least one first feature vector is matched with a first reference feature vector, wherein the first reference feature vector is associated with a first reference timing information, indicating a first position on said reference rendering timeline. Synchronization information is generated based on the first rendering time and said first reference timing information.

It is to be understood that the above description is included to illustrate the operation of the preferred embodiments and is not meant to limit the scope of the invention. From the above discussion, many variations will be apparent to one skilled in the art that would yet be encompassed by the spirit and scope of the present invention.

## Claims

1. Method for enabling synchronization of the rendering of multiple associated content parts, using a reference rendering timeline, preferably each of said multiple associated content parts being rendered by a different rendering device, said method comprising:
generating a first captured content part by capturing a first rendered content part, wherein said first rendered content part is generated by rendering a first content part of said multiple content parts by a first rendering device;
determining a first rendering time, indicating when said first content part was rendered by the first rendering device;
extracting at least one first feature vector from said first captured content part;
matching one of said at least one first feature vector with a first reference feature vector, wherein said first reference feature vector is associated with a first reference timing information, indicating a first position on said reference rendering timeline;
generating synchronization information using said first rendering time and said first reference timing information, said synchronization being based at least in part on said synchronization information.

2. Method according to claim 1, further comprising:
determining a second rendering time, indicating when a second content part of said multiple content parts was rendered, preferably by a second rendering device,
wherein the first content part is provided in a first content stream to the first rendering device and the second content part is provided in a second content stream, preferably to said second rendering device,
wherein generating synchronization information is further based on said second rendering time.

3. Method according to claim 2, wherein the second rendering time is determined in accordance with a protocol, preferably a transport or streaming protocol, used for providing said second content part to said second rendering device.

4. Method according to claim 2, further comprising:
generating a second captured content part by capturing a second rendered content part, wherein said second rendered content is generated by rendering said second content part, preferably by the second rendering device;
extracting at least one second feature vector from said second captured content part.
matching one of said at least one second feature vectors with said first reference feature vector, or, with a second reference feature vector, wherein said second reference feature is associated with a second reference timing information, indicating a second position on said reference rendering timeline.

5. Method according to claim 4, wherein said second feature vector is or matches with said first feature vector.

6. System for enabling synchronization of the rendering of multiple associated content parts, using a reference rendering timeline, preferably each of said multiple associated content parts being rendered by a different rendering device" said system comprising:
- a first capturing device arranged for generating a first captured content part by capturing a first rendered content part, wherein said first rendered content part is generated by rendering a first content part of said multiple content parts by a first rendering device;
- a first determination module arranged for determining a first rendering time, indicating when said first content part was rendered by the first rendering device;
- a first feature vector extraction module arranged for extracting at least one first feature vector from said first captured content part;
- a first matching module arranged for matching one of said at least one first feature vector with a first reference feature vector, wherein said first reference feature vector is associated with a first reference timing information, indicating a first position on said reference rendering timeline; and,
- a synchronization information generator arranged for generating synchronization information using said first rendering time and said first reference timing information, said synchronization being based at least in part on said synchronization information.

7. System according to claim 6, further comprising:
- a second determination module arranged for determining a second rendering time, indicating when a second content part of said multiple content parts was rendered, preferably by a second rendering device,
wherein the first content part is provided in a first content stream to the first rendering device and the second content part is provided in a second content stream, preferably to said second rendering device,
wherein generating synchronization information is further based on said second rendering time.

8. System according to claim 7, further comprising:
- a second capturing device arranged for generating a second captured content part by capturing a second rendered content part, wherein said second rendered content part is generated by rendering said second content part;
- a second feature vector extraction module arranged for extracting at least one second feature vector from said second captured content part;
- a second matching module arranged for matching one of said at least one second feature vector with said first reference feature vector, or, with a second reference feature vector, wherein said second reference feature is associated with a second reference timing information, indicating a second position on said reference rendering timeline.

9. System according to claim 7 or 8, wherein said second feature vector is or matches with said first feature vector.

10. Computer readable medium, preferably non-transitory, with instructions, wherein the instructions are arranged for making the computer perform any one of the embodiments of the method according to the invention.

11. Computer program product, comprising software code portions configured for, when run in the memory of a computer, executing any one of the method steps according to any one of claims 1-5.

12. Capturing device for enabling synchronization of the rendering of multiple associated content parts, using a reference rendering timeline, preferably each of said multiple associated content parts being rendered by a different rendering device,
said capturing device arranged for generating a first captured content part by capturing a first rendered content part, wherein said first rendered content part is generated by rendering a first content part of said multiple content parts by a first rendering device;
said capturing device comprising:
- a first feature vector extraction module arranged for extracting at least one first feature vector from said first captured content part and, preferably for providing said at least one first feature vector to a first matching module;
and optionally at least one of:
- a first determination module arranged for determining a first rendering time, indicating when said first content part was rendered by the first rendering device and, preferably for providing said first rendering time to a synchronization information generator, said synchronization information generator arranged for generating synchronization information, using said first rendering time and said first reference timing information, said synchronization based at least in part on said synchronization information
- a first matching module arranged for matching said at least one first feature vector with a first reference feature vector, said first reference feature vector being associated with a first reference timing information, indicating a first position on said reference rendering timeline;

13. Capturing device according to claim 12,
further arranged for generating a second captured content part by capturing a second rendered content part, wherein said second rendered content part is generated by rendering a second content part of said multiple content parts, preferably by a second rendering device, saidfirst content part being provided in a first content stream to the first rendering device and the second content part being provided in a second content stream, preferably to said second rendering device,
the capturing device further comprising at least one of:
- a second determination module arranged for determining a second rendering time, indicating when said second content part was rendered by the second rendering device and, preferably for transmitting said second rendering time to the synchronization information generator;
- a second feature vector extraction module arranged for extracting at least one second feature vector from said second captured content part, and, preferably for transmitting said at least one second feature vector to a second matching module;;
- a second matching module arranged for matching said at least one second feature vector with said first reference feature vector, or, with a second reference feature vector, wherein said second reference feature vector is associated with a second reference timing information, indicating a second position on said reference rendering timeline.

14. Synchronization server for enabling synchronization of the rendering of multiple associated content parts, using a reference rendering timeline, preferably each of said multiple associated content parts being rendered by a different rendering device, said synchronization server comprising:
- a first matching module arranged for matching one of at least one first feature vector with a first reference feature vector,
wherein said first reference feature vector is associated with a first reference timing information, indicating a first position on said reference rendering timeline; and,
wherein said at least one first feature vector is extracted from a first captured content part, preferably by a first capturing device, and wherein said first captured content part is generated by capturing a first rendered content part by said first capturing device, wherein said first rendered content part is generated by rendering said first content part by a first rendering device;
- a synchronization information generator arranged for receiving a first rendering time, preferably from said first capturing device; said first rendering time indicating when a first content part of said multiple content parts was rendered by the first rendering device; said synchronization information generator further arranged for generating synchronization information based on the first rendering time and said first reference timing information, said synchronization being based at least in part on said synchronization information

15. Synchronization server according to claim 14, further comprising at least one of:
- a first determination module arranged for determining said first rendering time;
- a first feature vector extraction module arranged for extracting said at least one first feature vector from said first captured content part;
- a second determination module arranged for determining a second rendering time, indicating when a second content part of said multiple content parts was rendered, preferably by a second rendering device;
wherein the first content part is provided in a first content stream to the first rendering device and the second content part is provided in a second content stream, preferably to said second rendering device,
- a second feature vector extraction module arranged for extracting at least one second feature vector from a second captured content part, wherein said second captured content part is generated by capturing a second rendered content part, wherein said second rendered content part is generated by rendering said second content part, preferably by the second rendering device
- a second matching module arranged for matching one of said at least one second feature vector with said first reference feature vector, or, with a second reference feature vector, wherein said second reference feature vector is associated with a second reference timing information, indicating a second position on said reference rendering timeline.
